# EUROPEAN PATENT APPLICATION

(11) **EP 4 212 002 A1**
(43) Date of publication of application: **19.07.2023**
(21) Application number: 21866708.7
(22) Date of filing: 06.09.2021
(51) Int. Cl.: A01D 34/416

(54) **CORD-HOLDING DEVICE**

(30) Priority: 09.09.2020 JP 2020151046; 09.09.2020 JP 2020151047
(71) Applicant: Saitou Nensi Corporation, Tomata-gun, Okayama 708-0312 (JP)
(72) Inventor: SAITO Kenshi, Tomata-gun, Okayama 708-0312 (JP)
(74) Representative: v. Bezold & Partner Patentanwälte - PartG mbB
(86) International application number: PCT/JP2021/032608
(87) International publication number: WO 2022/054749

(57) **Abstract**

A cord holding device (10) includes an upper case (20), a cap (60), and a protective cover (70). The cap (60) includes a switching mechanism (80) that is provided slidably in the radial direction of the disk (61) on the disk (61), engages with the cover section (72) of the protective cover (70) to couple the disk (61) and the cover section (72) when slid outward and in the radial direction of the disk (61), and separates from the cover section (72), thereby releasing the coupling of the disk (61) and the cover section (72) when slid in the opposite direction. The cord holding device (10) is for holding a mower cord.

## Description

### Technical Field

The present disclosure relates to a cord holding device.

### Background Art

A cord holding device is a device that holds a cord that functions as a blade of a mower when attached to a rotating shaft of the mower. Among such cord holding devices are devices that, when the rotating shaft of the mower rotates and, thus, the cord holding device is rotating, can maintain, at a certain length, the length of an end of the cord extending from a bobbin on which the cord is wound, and that can adjust that length.

For example, Patent Literature 1 describes a cord holding device that includes a case formed in the shape of a cylinder in which an upper end is open, and a cap that includes a plurality of claws arranged in a circle on a lower surface and that covers the upper end of the case. A cylindrical bobbin on which the cord can be wound, and a cylindrical ratchet wheel having an upper end on which a plurality of claws arranged are accommodated in an internal space formed by the case and the cap. The ratchet wheel is coupled to the bobbin in a state in which the ratchet wheel is inserted into the bobbin.

With the cord holding device of Patent Literature 1, the bobbin coupled to the ratchet wheel is coupled to the cap by the claws of the ratchet wheel engaging with the plurality of claws of the cap. As a result, even when the entire cord holding device is rotated by the rotating shaft of the mower in a state in which the cord is wound on the bobbin, the bobbin does not rotate relative to the cap and, as such, the length, from the bobbin to the end, of the cord extending from the bobbin is maintained.

When a lower surface of the case strikes an object such as, for example, the ground when the entire cord holding device is rotating, the engagement between the claws of the ratchet wheel and the plurality of claws of the cap temporarily releases due to that impact. As such, the ratchet wheel and the bobbin are temporarily detached from the rotation of the cap and the case. As a result, the cord is temporarily fed out from the bobbin. Thus, with the cord holding device of Patent Literature 1, the length of the cord is adjusted by striking of the case.

Additionally, Patent Literature 2 describes a cord holding device including a cylinder-shaped case having an upper end that is open and in which a circular through-hole is opened in a lower end center, and an upper cover to which a rotating shaft of a mower is attached and that covers an upper end of the case. A bobbin and a cylindrical presser are accommodated in an internal space formed by the case and the upper cover. The bobbin includes a cylinder section on which a cord is wound, and is provided with a plurality of claws arranged in a circumferential direction on an inner circumferential wall of that cylinder. The cylindrical presser includes an outer circumferential wall on which another plurality of claws that is engageable with the plurality of claws of the bobbin is provided, is inserted into the through-hole of the case and the cylinder section of the bobbin, and is pressed downward by a coil spring.

With the cord holding device described in Patent Literature 2, in a state in which the presser is pressed downward by the coil spring, the plurality of claws of the presser engages with the plurality of claws of the bobbin, thereby coupling the presser to the bobbin. Meanwhile, the presser includes a protrusion that is loosely inserted into a vertical groove located on an inner wall of the through-hole of the case and, when the rotating shaft rotates while the rotating shaft of the mower is attached to the upper cover, the presser rotates in conjunction with the case. As a result, the bobbin rotates in conjunction with the case and the presser. As such, when rotating, the length of the cord from the bobbin to the end is maintained.

However, when, for example, the presser is pressed against an object such as, for example, the ground, and that pressing force is greater than the pressing force of the coil spring, the presser moves relatively upward with respect to the bobbin. As a result, the plurality of claws of the presser separate from the plurality of claws of the bobbin, and the cord is fed out from the bobbin. With the cord holding device described in Patent Literature 2, the length of the cord is adjusted by pressing the presser against the obj ect.

### Citation List

### Patent Literature

Patent Literature 1: Unexamined Japanese Patent Application Publication No. 2015-181475
Patent Literature 2: Unexamined Japanese Patent Application Publication No. 2000-262126

### Summary of Invention

### Technical Problem

With the cord holding device described in Patent Literature 1, when rotating due to the rotation of the rotating shaft of the mower, the case rotates. As a result, when a user desires to feed out the cord and, as such, strikes the lower surface of the case against the ground, the rotating case scatters objects on the ground such as pebbles, dirt, and the like.

With the cord holding device described in Patent Literature 2 as well, the presser rotates when the device itself rotates, and the rotating presser scatters objects on the ground such as pebbles, dirt, and the like.

Additionally, the cord holding device described in Patent Literature 1 is provided with a special ring including a cam mechanism to enable feeding out and winding up of the cord, However, since the ring is disposed under the cap, feeding out and winding up of the cord is difficult when the rotating shaft of the mower is attached to the cap.

With the cord holding device described in Patent Literature 2, it is possible to perform feeding out of the cord by repeating a task of pressing the presser and pulling the cord. However, this task is not easy. Furthermore, disassembly of the cord holding device is required to wind up the cord, and this disassembly task is not easy.

The present disclosure is made with the view of the above situation, and an objective of the present disclosure is to provide a cord holding device whereby objects such as pebbles, dirt, and the like can be prevented from contacting a case and scattering when the cord holding device rotates due to the rotation of a rotating shaft of a mower. Additionally, an objective is to provide a cord holding device in which feeding out and winding up of a cord can be easily carried out.

### Solution to Problem

A cord holding device for holding a mower cord according to the present disclosure that achieves the objectives described above includes:
a case that includes a ceiling plate to which a rotating shaft of a mower is attached and a bottom plate on which a through-hole is formed at a position coaxial with a center axis of the rotating shaft when the rotating shaft is attached to the ceiling plate, wherein a plurality of first claws is provided on a surface of an upper side of the bottom plate, a bobbin on which a mower cord is windable that is accommodated coaxially with the center axis in an internal space located between the ceiling plate and the bottom plate, the bobbin including, on a surface of a lower side, and a plurality of second claws that is engageable with the plurality of first claws, and the case is coupled to the bobbin by the bobbin being pressed against the bottom plate by a coil spring and the plurality of second claws engaging with the plurality of first claws;
a coupling member of the bobbin that includes a connector that is connected to the bobbin and that extends from the bobbin, through the through-hole, and downward from the bottom plate of the case, and a disk that is provided on a lower end of the connector and that is coaxial with the center axis, wherein the bobbin is rotated as a result of, when the plurality of first claws and the plurality of second claws are engaged, that engagement being released due to the disk being pressed to one side of the bobbin and the disk rotating around the center axis; and
a protective cover including a cylinder section that is rotatably held on the bobbin, is inserted into the through-hole and extends from the through-hole downward from the bottom plate of the case, and that is rotatable coaxially with the center axis in the through-hole, the coupling member being inserted into the cylinder section, and a cover section that is supported on a lower end of the cylinder section and that covers the case from below,
wherein
the coupling member includes a switching mechanism that is provided slidably in a radial direction of the disk on the disk, engages with the cover section of the protective cover to couple the disk and the cover section when slid outward and in the radial direction of the disk, and separates from the cover section, thereby releasing the coupling of the disk and the cover section when slid in an opposite direction.

The protective cover may include, on the cover section, a first recess recessed from an inner circumference toward a side of an outer circumference of the cover section,
the switching mechanism may include, on the disk, a slide piece that is slidable in the radial direction of the disk, and
when the slide piece is slid outward and in the radial direction of the disk, an end located on a side of a slide direction may enter the first recess, thereby coupling the disk provided with the slide piece to the cover section provided with the first recess.

The disk may include a groove that accommodates the slide piece therein, extends from a disk center to an outer circumference, and holds the slide piece such that the slide piece is slidable in an extending direction of the groove,
a thickness of the slide piece may be identical to a depth of the groove, and
the disk may be positioned at an identical height in a vertical direction as the cover section or above the cover section.

The cover section may cover the case from below by an outer circumference of the cover section being positioned on an outer side of the case.

The bobbin may include a protrusion that is provided on an outer circumference side and that protrudes upward, and a second recess that is provided more on an inner circumference side than the protrusion and that is recessed relatively downward from a tip of the protrusion due to the protrusion protruding upward and, in a state in which the plurality of first claws and the plurality of second claws are engaged, may include a gap between the ceiling plate of the case and the protrusion,
the case may include a movable piece that has a thickness in the vertical direction that is less than a height in the vertical direction of the gap, and that moves in accordance with centrifugal force generated when the rotating shaft is attached to the ceiling plate and rotates, and
due to the movable piece being positioned in the second recess, when viewed from above, when the rotating shaft is rotating at low speed, the movable piece may not restrict pressing up of the bobbin from the bottom plate by the coupling member, and due to the movable piece moving to a position overlapping the protrusion, when viewed from above, when the rotating shaft is rotating at high speed, the movable piece may enter the gap and restrict the pressing up of the bobbin from the bottom plate by the coupling member.

The case may further include an elastic member that is disposed in the internal space of the case, a first portion of the elastic member being fixed to the ceiling plate, a second portion separated from the first portion supporting an end of the movable piece, and
the movable piece may move due to centrifugal force, applied to the movable piece when the rotating shaft is attached to the ceiling plate and rotates, elastically deforming the elastic member.

The case may include a wall that protrudes downward from the ceiling plate, the elastic member may be a coil spring having a first end and a coil section that are fixed to the ceiling plate and a second end that is fixed to the movable piece, the second end pressing the movable piece toward the wall, and
the coil spring may cause the movable piece to contact the wall when rotation by the rotating shaft is not carried out and the case is stopped.

### Advantageous Effects of Invention

According to the present disclosure, the coupling member includes the switching mechanism that is provided slidably in the radial direction of the disk on the disk, engages with the cover section of the protective cover to couple the disk and the cover section when slid outward and in the radial direction of the disk, and separates from the cover section, thereby releasing the coupling of the disk and the cover section when slid in the opposite direction. As such, the coupling of the disk and the cover section by the switching mechanism is released by the switching mechanism when the rotating shaft of the mower is attached to the ceiling plate of the case and the rotating shaft is rotating and, as such, the cover section can be detached from the disk that rotates together with the case and the bobbin. As a result, the cover section can suppress the scattering of objects on the ground such as pebbles, dirt, and the like.

Additionally, the disk is coupled to the cover section by the switching mechanism and, as such, the bobbin, that is coupled to the coupling member that includes the disk, can be rotated when the user rotates the cover section. As a result, the user can easily feed out the cord from the bobbin and wind up the cord on the bobbin.

### Brief Description of Drawings

FIG. 1 is an exploded perspective view of a cord holding device according to an embodiment of the present disclosure, in which the cord holding device is exploded and viewed from diagonally above;
FIG. 2 is an exploded perspective view of the cord holding device according to the embodiment, in which the cord holding device is exploded and viewed from diagonally below;
FIG. 3 is a perspective view of the cord holding device according to the embodiment, viewed from diagonally above;
FIG. 4 is a cross-sectional view taken along line IV-IV illustrated in FIG. 3;
FIG. 5 is a cross-sectional view taken along line V-V illustrated in FIG. 3;
FIG. 6 is a perspective view of the cord holding device according to the embodiment, viewed from diagonally below;
FIG. 7 is a bottom view of the cord holding device according to the embodiment;
FIG. 8 is a perspective view of the cord holding device according to the embodiment, in which a slide piece of the cord is slid into an engaging recess;
FIG. 9 is a bottom view of an upper case in a case in which the cord holding device according to the embodiment is stopped or rotating at low speed;
FIG. 10 is a bottom view of the upper case in a case in which the cord holding device according to the embodiment is rotating at high speed;
FIG. 11 is a perspective view illustrating a use state of the cord holding device according to the embodiment;
FIG. 12 is a cross-sectional view taken in the use state of the cord holding device according to the embodiment;
FIG. 13 is a cross-sectional view of the cord holding device according to the embodiment, in a case in which a cap and a protective cover are pressed up when the cord holding device is rotating at low speed;
FIG. 14 is a cross-sectional view of the cord holding device according to the embodiment, taken along another line, in a case in which the cap and the protective cover are pressed up when the cord holding device is rotating at low speed;
FIG. 15 is a cross-sectional view of the cord holding device according to the embodiment, in a case in which the cord holding device is rotating at high speed;
FIG. 16 is a cross-sectional view of the cord holding device according to the embodiment, taken along another line, in a case in which the cap and the protective cover are pressed up when the cord holding device is rotating at high speed; and
FIG. 17 is a bottom view illustrating a modified example of movable pieces 27A, 27B of the cord holding device according to the embodiment.

### Description of Embodiments

In the following, a cord holding device according to embodiments of the present disclosure is described in detail while referencing the drawings. Note that, in the drawings, identical or equivalent components are denoted with the same reference numerals. Additionally, in the drawings, a vertical direction in a case in which a mower having a rotating shaft facing downward is attached to the cord holding device is defined as the Z direction. Moreover, clockwise when viewing, from below, the mower having the rotating shaft facing downward is defined as a rotation direction R of the rotating shaft.

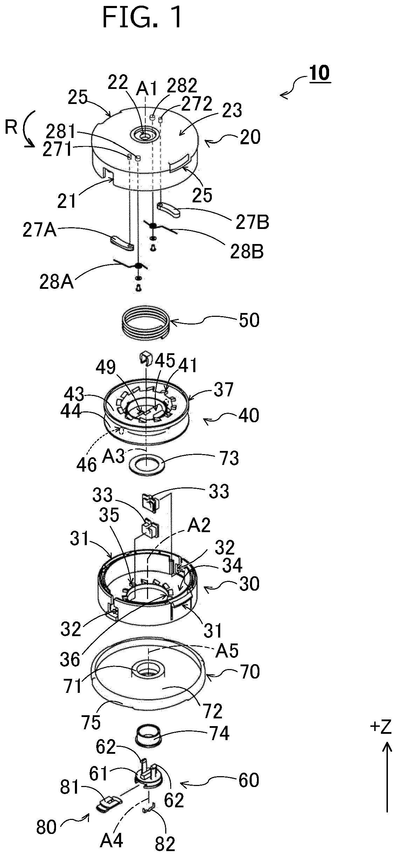

The cord holding device according to this embodiment is provided with a protective cover in order to prevent objects such as pebbles, dirt, and the like from contacting the cord and scattering when at a time of rotation by the mower, and this protective cover is provided with a switching mechanism for switching between a cord feed out function and a cord wind up function. Additionally, the cord holding device is provided with a mechanism for restricting the cord feed out function when rotating at high speed. Firstly, the configuration of the cord holding device is described while referencing FIGS. 1 to 5. Then, the switching mechanism and the mechanism for restricting the cord feed out function are described.

### Configuration of cord holding device

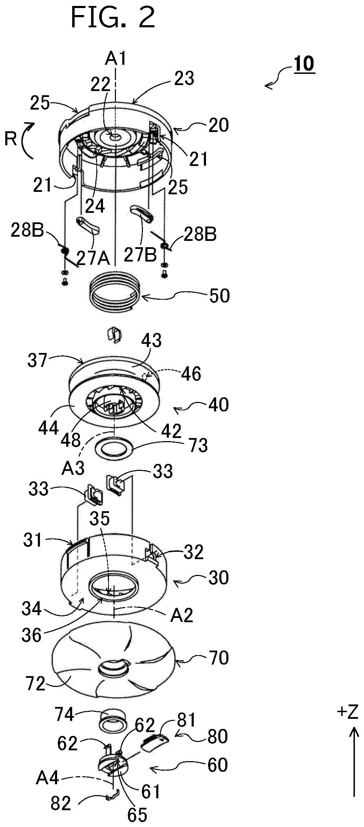

As illustrated in FIGS. 1 and 2, a cord holding device 10 is configured from an upper case 20, a lower case 30, a bobbin 40, a coil spring 50, a cap 60, and a protective cover 70.

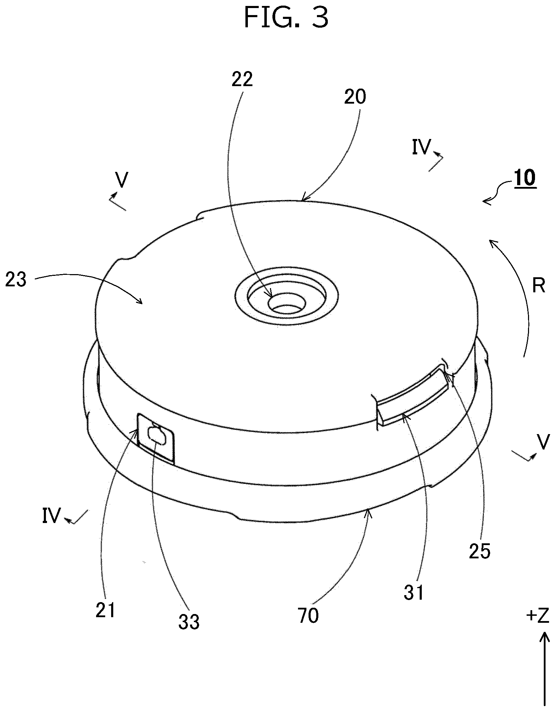

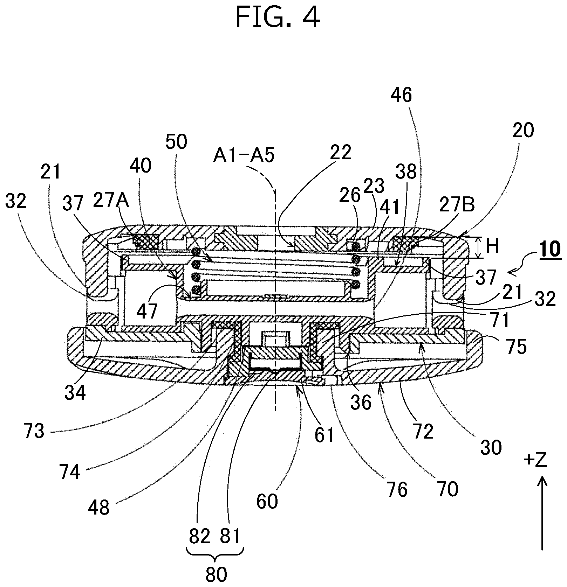

In order to cover the bobbin 40 from above, the upper case 20 is formed in the shape of a rough cylinder in which a cylinder axis is arranged in the vertical direction, an upper end side of is closed by a round plate, and a lower end side is open. Moreover, as illustrated in FIGS. 3 and 4, the upper case 20 includes a cylinder wall on which a pair of cord pull-out ports 21 is provided in order to pull out a cord wound on the bobbin 40 when the bobbin 40 is accommodated in the upper case 20.

The upper case 20 includes a connection port 22 for inserting a bolt that attaches a rotating shaft of a mower in order for the upper case 20 to rotate in a state in which the cord is pulled out through the cord pull-out ports 21. The connection port 22 is provided on a round plate, that is, on a ceiling plate 23 located on the upper end of the cylinder. The connection port 22 has a circular shape, and a center thereof is coaxial with a cylinder axis A1 of the upper case 20. Due to this, when the rotating shaft of the mower is attached, the cylinder axis A1 of the upper case 20 matches the center axis of the rotating shaft and the upper case 20 can rotate around the center axis.

Furthermore, as illustrated in FIG. 2, the upper case 20 includes a plurality of claws 24 arranged in a ring-like manner on a lower surface of the ceiling plate 23 of the upper case 20. The plurality of claws 24 are for controlling the rotation of the accommodated bobbin 40 when the upper case 20 is rotated by the rotating shaft of the mower.

When viewed along the rotation direction R of the rotating shaft of the mower, each claw 24 has a shape including an inclined surface that becomes lower with progression in the rotation direction R, and a vertical surface that extends upward from a lower end of that inclined surface. The claws 24 are arranged along the circumference of a circle centered on the cylinder axis A1. As illustrated in FIG. 1, a plurality of claws 41 arranged in a ring-like manner is provided on an upper surface of the bobbin 40 as well. While a detailed description is given later, the claws 24 engage with the claws 41 of the upper surface of the bobbin 40 to control the rotation of bobbin 40 in a specific case when the cord holding device 10 is rotating.

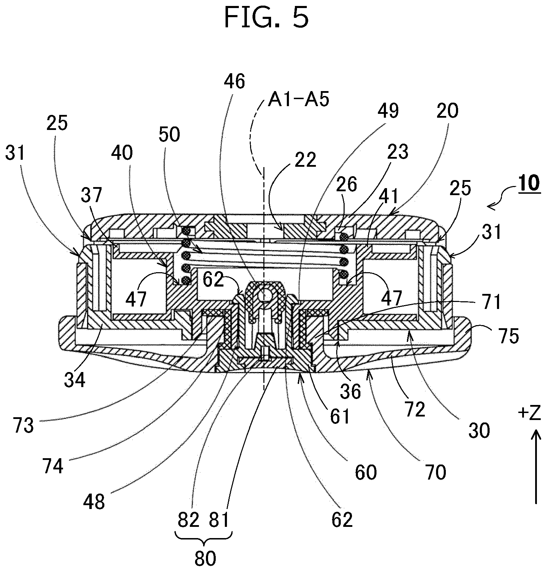

As illustrated in FIG. 5, a pair of attachment holes 25 that oppose each other across the cylinder axis A1 is provided on an upper portion inside the cylinder wall of the upper case 20. With respect thereto, a pair of hooks 31 is provided on the lower case 30, on an upper portion inside the cylinder wall. The hooks 31 oppose each other across a cylinder axis A2 and each has a tip that faces outward. The lower case 30 is fixed to the upper case 20 by the pair of hooks 31 hooking on the pair of attachment holes 25.

In order to cover the bobbin 40 from below, as illustrated in FIGS. 1 and 2, the lower case 30 is formed in the shape of a rough cylinder in which a cylinder axis is arranged in the vertical direction, an upper end side is open, and a lower end side is closed by a round plate. An outer diameter of the cylinder is substantially equal to an inner diameter of the upper case 20. Due to this, the lower case 30 can be fitted into the upper case 20. As a result, the lower case 30 is fitted in and assembled on the open cylinder end of the upper case 20.

A pair of cord pull-out ports 32, for pulling out the cord from the bobbin 40 when the lower case 30 is assembled on the upper case 20, is provided on the cylinder wall. Moreover, a fitting 33 is fitted in each of the cord pull-out ports 32 and, due to the fitting 33, the cord can be prevented from being damaged.

As illustrated in FIG. 1, the lower case 30 includes a plurality of claws 35 (referred to as "first claws" in the present description) for transferring rotation to the bobbin 40 when the lower case 30 is rotated by the rotating shaft of the mower. The plurality of claws 35 is arranged in a ring-like manner on the surface of the inner side of the round plate that is the cylinder lower end of the lower case 30, that is, is arranged on the upper surface of the bottom plate 34.

When viewed along the rotation direction R, each of the claws 35 has a shape including an inclined surface that rises with progression in the rotation direction R, and a vertical surface extending downward from an upper end of the inclined surface. The claws 35 are arranged along the circumference of a circle centered on the cylinder axis A2 of the lower case 30. With respect thereto, as illustrated in FIG. 2, a plurality of claws 42 arranged in a ring-like manner is also provided on a lower surface of the bobbin 40. While a detailed description is given later, the claws 35 engage with the claws 42 of the bobbin 40 at a time of rotation of the cord holding device 10, thereby transferring the rotation of the lower case 30 to the bobbin 40.

Meanwhile, since the cap 60 is attached to the lower side of the bobbin 40, in order to allow the cap 60 to protrude toward the lower side of the lower case 30, a circular through-hole 36 that has an axis overlapping the cylinder axis A2 is formed on the bottom plate 34 of the lower case 30, as illustrated in FIGS. 1 and 2. Moreover, the bobbin 40 is accommodated in the lower case 30.

The bobbin 40 is formed in the shape of a cylinder having flanges 43, 44 protruding from each cylinder end. In order for the bobbin 40 to be rotatable in the lower case 30, the bobbin 40 has an outer diameter that is slightly less than the inner diameter of the lower case 30, and a height that is slightly less than the height of the internal space of the lower case 30. As illustrated in FIG. 1, a pipe-like member 45 which crosses the cylinder internal space through the cylinder axis A3 is formed at the bottom of a cylinder section of the bobbin 40. The pipe-like member 45 is for passing the cord. Furthermore, a hole 46 for passing the cord that passes through the pipe-like member 45 is formed in the cylinder section. Due to this, the cord can be passed through the pipe-like member 45 and, then, wound on the cylinder section of the bobbin 40.

Note that, in order to prevent the cord from becoming slack due to the rotating shaft of the mower rotating, the winding direction of the cord on the bobbin 40 is the rotation direction R of the rotating shaft. In the following, it is assumed that the rotation direction R is the winding direction of the cord, and the direction opposite the rotation direction R is the feed-out direction of the cord.

As illustrated in FIGS. 4 and 5, the bobbin 40 is accommodated in the internal space of the upper case 20 and the lower case 30 that are assembled together. At this time, the lower surface of the bobbin 40 is brought into contact with the plurality of claws 35 (see FIG. 1) provided on the bottom plate 34 of the lower case 30 and, as such, the bobbin 40 is accommodated together with a coil spring 50 in the internal space. A circular groove 47 is formed on the upper end of the cylinder section of the bobbin 40 in order to position the coil spring 50. Moreover, one end of the coil spring 50 is fitted into the groove 47. With respect thereto, a groove 26 having the same shape is formed on the ceiling plate 23 of the upper case 20, and the other end of the coil spring 50 is fitted into the groove 26. As a result, the bobbin 40 and the lower case 30 sandwich the coil spring 50.

A natural length of the coil spring 50 is greater than a distance from the groove 47 of the bobbin 40 to the groove 26 of the upper case 20 and, as such, the coil spring 50 is compressed in the internal space of the upper case 20 and the lower case 30. As a result, the bobbin 40 is pressed against the bottom plate 34 of the lower case 30. Thus, the lower surface of the bobbin 40 contacts the bottom plate 34.

As described above, the plurality of claws 42 (also referred to in the present description as "second claws") arranged in a ring-like manner illustrated in FIG. 2 is provided on the lower surface of the bobbin 40. In order to be engageable with the claws 35 located on the upper surface of the bottom plate 34 of the lower case 30, each of the claws 42 has vertical symmetry and symmetry in the rotation direction R with each of the claws 35. That is, when viewed along the rotation direction R, each of the claws 42 has a shape including a vertical surface extending downward from the lower surface of the bobbin 40, and an inclined surface that rises, with progression in the rotation direction R, from the lower end of that vertical surface. Thus, the arrangement of the claws 42 is the same as the arrangement of the claws 35. As a result, when the bobbin 40 is assembled in the upper case 20 and the lower case 30, a pressing force of the coil spring 50 is applied and, as a result, the claws 42 engage with the claws 35.

While not illustrated, as a result of the claws 42 and the claws 35 engaging, the vertical surfaces of the claws 42 are located on the rotation direction R side of the vertical surfaces of the claws 35, and are adjacent to the vertical surfaces of the claws 35. Due to this, the bobbin 40 cannot rotate relative to the lower case 30 in the direction opposite the rotation direction R. As a result, when the lower case 30 is rotated in the rotation direction R, the bobbin 40 rotates in the rotation direction R at a same rotation speed as the lower case 30. Due to this, the bobbin 40 does not rotate relative to the lower case 30 and the cord is not fed out. As a result, the length of the cord is maintained.

Additionally, as described above, the plurality of claws 41 arranged in a ring-like manner illustrated in FIG. 1 is provided on the upper surface of the bobbin 40. In order to be engageable with each of the claws 24 (see FIG. 2) located on the lower surface of the ceiling plate 23 of the upper case 20, each of the claws 41 has vertical symmetry and symmetry in the rotation direction R with each of the claws 24. The arrangement of the claws 41 is the same as the arrangement of the claws 24. As a result, the claws 41 can engage with the claws 24.

The bobbin 40 is pressed against the bottom plate 34 of the lower case 30 by the coil spring 50. As such, the claws 41 of the bobbin 40 do not engage with the claws 24 of the upper case 20 unless a force compressing the coil spring 50 is applied to the bobbin 40.

Although not illustrated, in a situation in which a force compressing the coil spring 50 is applied to the bobbin 40, the bobbin 40 approaches the ceiling plate 23 of the upper case 20 and, as a result, the claws 41 of the bobbin 40 approach the claws 24 of the upper case 20. At this time, the bobbin 40 separates from the bottom plate 34 of the lower case 30, and the claws 42 located on the lower surface of the bobbin 40 separate from the claws 35 located on the bottom plate 34 of the lower case 30. As such, when the lower case 30 is rotating in the rotation direction R, the bobbin 40 decelerates to slower than the rotation speed of the lower case 30. As a result, the bobbin 40 rotates relative to the lower case 30 in the direction opposite the rotation direction R. In such a case, the claws 41 of the bobbin 40 slide, while rising in the direction opposite the rotation direction R, along the inclined surfaces of the claws 24 of the upper case 20 that become lower with progression in the rotation direction R. At this time, since those inclined surfaces and the vertical surfaces of the claws 41, adjacent in the direction opposite the rotation direction R, are adjacent to each other, the claws 41 of the bobbin 40 only slide to those vertical surfaces. Due to this, the bobbin 40 moves relatively, in the direction opposite the rotation direction R, that is, in the feed-out direction of the cord, the distance that the claws 41 of the bobbin 40 slide on the inclined surfaces of the claws 24 of the upper case 20. As a result, the bobbin 40 feeds the cord out that distance.

Returning to FIGS. 1 and 2, the cap 60 is coupled to the bobbin 40 in order to apply the force compressing the coil spring 50 and perform feeding out of the cord.

The cap 60 is named such because the cap 60 closes an opening of a cover section 72 of the protective cover 70. However, the cap 60 not only closes the opening, but also is a member (also referred to in the present description as "coupling member") that is coupled to the bobbin 40 and transfers an external force to the bobbin 40. In order to receive the external force, the cap 60 includes a disk 61 disposed downward from the lower case 30, and a pair of coupling claws 62 that extends from the disk 61 and that is for coupling to the bobbin 40.

The disk 61 is formed with an outer diameter that is slightly smaller than an inner diameter of a center through-hole formed on the cover section 72. While a detailed description is given later, the disk 61 is disposed on that through-hole, and closes that through-hole. Meanwhile, as illustrated in FIG. 2, a groove 65 for installing a hereinafter described switching mechanism 80 is formed on a lower surface of the disk 61. Additionally, the pair of coupling claws 62 for coupling to the bobbin 40 (also referred to in the present description as "connectors for connecting to the bobbin 40" ) is provided on an upper surface of the disk 61.

Each of the coupling claws 62 has a hook shape having a protrusion that protrudes sideways at a tip of a rod-like portion that extends upward. Moreover, the protrusion is directed outward and in the radial direction of the disk 61. Additionally, the coupling claws 62 are arranged sandwiching a disk axis A4.

As illustrated in FIG. 2, a disk seat 48 that is formed in the shape of a small cylinder having the cylinder axis A3 as an axis and, also, that protrudes downward from the lower surface of the bobbin 40 is provided on the lower surface side of the bobbin 40. Additionally, as illustrated in FIG. 1, a pair of through-holes 49 that are disposed sandwiching the pipe-like member 45 and on which the coupling claws 62 can hook are formed on the bottom of the cylinder section of the bobbin 40. As illustrated in FIG. 5, the disk 61 is disposed contacting the disk seat 48. In this state, each of the coupling claws 62 is passed through the through-hole 36 of the lower case 30 to the disk seat 48 that protrudes downward, and hooks on each of the through-holes 49 of the bobbin 40. Thus, the cap 60 is coupled to the bobbin 40. As a result, the cap 60 transfers forces applied to the cap 60 to the bobbin 40.

For example, when pressed from below, the cap 60 presses the bobbin 40 upward and applies a compressing force to the coil spring 50. Due to this, the claws 41 of the bobbin 40 illustrated in FIG. 1 approach the claws 24 of the case 20 illustrated in FIG. 2, and the feeding out of the cord described above is performed.

When the cap 60 is rotated in the rotation direction R when the rotating shaft of the mower is stopped, the cord is wound up on the bobbin 40. Specifically, when the cap 60 is not pressed from below, the coil spring 50 presses the bobbin 40 against the bottom plate 34 of the lower case 30 and, as such, the claws 42 of the bobbin 40 illustrated in FIG. 2 and the claws 35 of the lower case 30 illustrated in FIG. 1 engage. At this time, although not illustrated, as described above, the vertical surfaces of the claws 42 of the bobbin 40 are located on the rotation direction R side of the vertical surfaces of the claws 35 of the lower case 30, and are adjacent to the vertical surfaces of the claws 35. Moreover, on the rotation direction R side of the vertical surfaces of those claws 35, the inclined surfaces of the adjacent claws 35 that rise with progression in the rotation direction R and the vertical surfaces of the adjacent claws 35 that progress downward from the upper end of those inclined surfaces are provided. As such, the claws 42 of the bobbin 40 can slide along the inclined surfaces of the claws 35 adjacent on the rotation direction R side. In order to slide the claws 42 of the bobbin 40 in this manner, the bobbin 40 is rotated relative to the lower case 30 in the rotation direction R. Here, the bobbin 40 is rotated in the rotation direction R by rotating the cap 60 in the rotation direction R when the rotating shaft of the mower is stopped. As a result, the cap 60 winds up the cord on the bobbin 40.

The cap 60 is coupled to the bobbin 40 and, as such, rotates together with the bobbin 40 when the bobbin 40 rotates due to the rotation of the rotating shaft of the mower. At this time, the lower case 30 also rotates. As such, during use of the mower, pebbles, dirt, and other objects (hereinafter, referred to simply as "objects") may contact the cap 60 and the lower case 30 and be scattered around the mower. To suppress this, as illustrated in FIGS. 4 and 5, the protective cover 70 is attached to the cap 60.

The protective cover 70 has the shape of a disk in which a hole in opened in the center. Specifically, as illustrated in FIG. 1, the protective cover 70 includes a cylinder section 71, and a disk-shaped cover section 72 that is coaxial with the cylinder section 71 and in which a through-hole is formed in the center.

As illustrated in FIGS. 4 and 5, the cylinder section 71 is formed such that an outer diameter thereof is smaller than the inner diameter of the through-hole 36 located on the bottom plate 34 of the lower case 30. Moreover, an upper portion of the cylinder section 71 is inserted into that through-hole 36. In the through-hole 36, an annular member 73 is disposed on the lower surface of the bobbin 40. The annular member 73 is formed from a low-friction resin such as polyacetal, for example, and functions as a thrust bearing. An upper end of the cylinder section 71 contacts the annular member 73. Note that the material of the annular member 73 may be another resin such as polyamide, polytetrafluoroethylene, or the like.

A step in which an inner diameter of an upper side is small and an inner diameter of a lower side increases is provided on an inner wall of the cylinder section 71. These inner diameters are significantly larger than an outer diameter of the disk seat 48 of the bobbin 40, and the disk seat 48 is inserted into the cylinder section 71. Moreover, a cylinder member 74, that includes a flange section that mates with the step of the inner wall of the cylinder section 71, is inserted between the cylinder section 71 and the disk seat 48. The cylinder member 74 is a bushing, that is, a sliding bearing, and is formed from the same low-friction resin as the annular member 73. Gaps large enough to allow sliding are provided among the cylinder section 71, the disk seat 48, and the cylinder member 74.

As described above, the upper end of the cylinder section 71 contacts the annular member 73, and the inner wall of the cylinder section 71 is separated from the cylinder member 74 by a gap large enough to allow sliding. Due to this, the rotation of the bobbin 40 is less likely to be transferred to the cylinder section 71. As a result, even when the bobbin 40 rotates, the cylinder section 71 can freely rotate and stop independent of the rotation of the bobbin 40.

Additionally, the upper end of the cylinder section 71 is contacting the annular member 73 that is adj acent to the lower surface of the bobbin 40 and, as such, as with the cap 60, when pressed from below, can press the bobbin 40 upward. As a result, the cylinder section 71 can bring the claws 41 of the bobbin 40 close to the claws 24 of the case 20, and cause the feeding out of the cord described above to be performed.

Meanwhile, the cylinder section 71 extends downward through the through-hole 36 that is located on the bottom plate 34 of the lower case 30 and, as a result, the lower portion of the cylinder section 71 protrudes downward from the lower case 30. That lower end of the cylinder section 71 is connected to the cover section 72.

As illustrated in FIG. 1, the cover section 72 is formed in the shape of a disk that is coaxial with a cylinder axis A5 of the cylinder section 71. As illustrated in FIGS. 1 and 2, a circular through-hole is formed at the center of the cover section 72, and an inner circumferential wall of the cylinder section 71 is connected to an inner circumferential wall of that through-hole. As illustrated in FIG. 5, in the through-hole of the cover section 72, the disk 61 of the cap 60 contacts the flange section of the cylinder member 74 and the disk seat 48 of the bobbin 40. Due to this, the disk 61 holds the cylinder member 74 after the vertical direction position of the cylinder member 74 is determined by the disk seat 48. As a result, the disk 61 holds the cylinder section 71 of the protective cover 70 via the cylinder member 74.

As described above, the outer diameter of the disk 61 is slightly smaller than the inner diameter of the through-hole of the cover section 72. As such, even if the disk 61 of the cap 60 rotates in the through-hole of the cover section 72 due to the rotation of the bobbin 40, that rotational force is not transferred to the cover section 72. Due to this, as with the cylinder section 71, even when the bobbin 40 rotates, the cover section 72 can freely rotate and stop independent of the rotation of the bobbin 40. As a result, when the cover section 72 contacts the objects at a time of mowing work, the cover section 72 is less likely to scatter those objects.

Additionally, although a hereinafter described slide piece 81 of the switching mechanism 80 is provided on the disk 61 of the cap 60 located in the through-hole of the cover section 72, the slide piece 81 does not protrude out from the through-hole of the cover section 72 and a lower surface of the slide piece 81 is slightly recessed toward the inside of the through-hole. Moreover, the center of the disk 61 also is slightly recessed toward the inside of the through-hole, and the outer circumference of the disk 61 has the same height in the vertical direction as the cover section 72. Due to this, even if the slide piece 81 rotates due to the bobbin 40 rotating, the slide piece 81 is less likely to contact the objects located downward from the cover section 72 at a time of mowing work. As a result, scattering of the objects is suppressed.

Furthermore, the outer diameter of the cover section 72 is greater than that of the lower case 30, and an outer circumference section of the cover section 72 is positioned outward from the lower case 30. Moreover, the cover section 72 includes an outer circumferential wall 75 that is provided along the outer circumference and that surrounds the lower case 30. Due to this, the cover section 72 covers the lower case 30 from below. As a result, the scattering of the objects such as pebbles and dirt at a time of mowing work is suppressed.

Note that, as illustrated in FIGS. 1 and 2, the cover section 72 has a shape in which the center portion is substantially flat and, near the outer circumference portion, progresses upward with progression toward the outside. Due to this, movement along the ground at a time of mowing work is facilitated, and mowing work is facilitated.

### Switching mechanism

The protective cover 70 positions the cap 60 inside the through-hole of the cover section 72 and makes it less likely for external objects to contact the cap 60. However, in this state, winding up of the cord is difficult. As described above, this is because winding up of the cord is performed by rotating the cap 60 in the rotation direction R to rotate the bobbin 40 in the same direction.

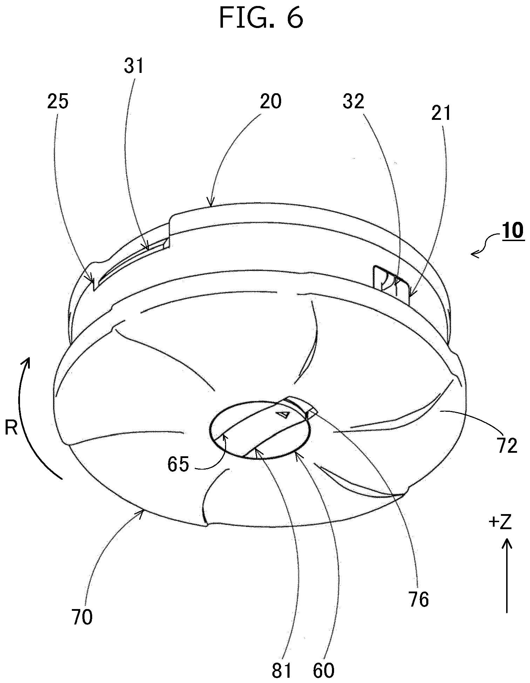

As such, the switching mechanism 80 is provided on the cap 60 in order to facilitate winding up of the cord. The switching mechanism 80 switches between a state coupled to the protective cover 70 and a state released from the protective cover 70. Next, the switching mechanism 80 is described while referencing FIGS. 1 to 5 and, also, FIGS. 6 to 8.

As illustrated in FIGS. 1 and 2, the switching mechanism 80 includes the slide piece 81 provided on the disk 61 of the cap 60, and a plate spring 82 that holds the slide piece at a specific position.

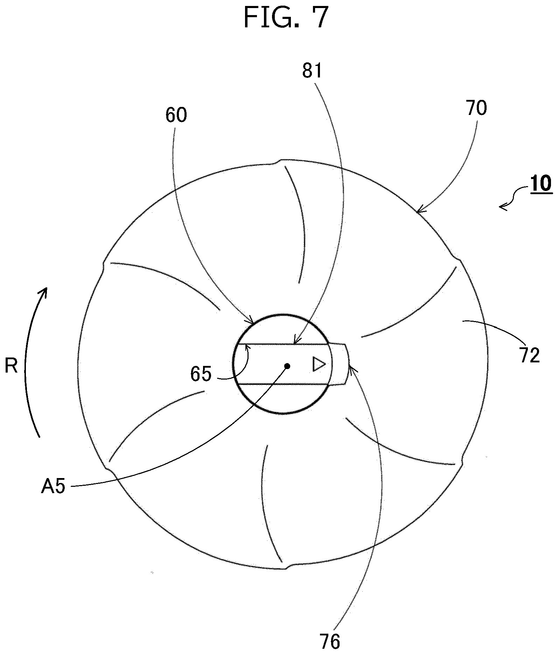

The slide piece 81 is formed in the shape of a rectangular elongated plate. As described above, the groove 65 illustrated in FIG. 2 is formed on the lower surface of the disk 61 of the cap 60. The groove 65 has an elongated rectangular shape that extends in a diameter direction of the disk 61. In a bottom view, the slide piece 81 is formed in substantially the same shape as the groove 65. A thickness of the slide piece 81 is substantially the same as a depth of the groove 65. As illustrated in FIGS. 6 and 7, the slide piece 81 is fitted in the groove 65. Additionally, the slide piece 81 is slidable in the groove 65 in a longitudinal direction of the groove 65. To facilitate operation, a mark indicating a sliding direction is provided on a lower surface of the slide piece 81.

As illustrated in FIG. 5, steps are formed on groove inner walls of the groove 65 and, as a result, a groove width of a deep side of the groove 65 is wider than a groove width on an opening side. The slide piece 81 includes steps on side wall surfaces to enable fitting in the groove having the shape described above. Accordingly, a width in a lateral direction of an upper surface side of the slide piece 81 is wider than a width of a lower surface side. Due to this, the slide piece 81 is prevented from falling out of the groove 65.

Furthermore, as illustrated in FIGS. 6 to 8, an engaging recess 76 (also referred to in the present description as "first recess") is formed on an inner wall of the through-hole located at the center of the cover section 72 of the protective cover 70. An end of the slide piece engages with the engaging recess 76 when the slide piece 81 is slid. As illustrated in FIG. 7, the engaging recess 76 is recessed, in a radial direction centered on the cylinder axis A5 of the protective cover 70, from the inner wall of the through-hole of the cover section 72. As such, by rotating the protective cover 70, that can freely rotate with respect to the cap 60, around the cylinder axis A5, the position of the engaging recess 76 can be aligned with the slide end of the slide piece 81. Additionally, the width of the engaging recess 76 is slightly greater than the width of the slide piece 81, and a length of the engaging recess 76 in the cylinder axis A5 direction is slightly greater than a thickness of the end of the slide piece 81. As such, the end of the slide piece 81 can enter into the engaging recess 76. As a result, the switching mechanism 80 can switch between coupling and releasing of the coupling of the protective cover 70 and the cap 60 due to the slide piece 81 entering into the engaging recess 76 and the slide piece 81 retreating from the engaging recess 76. Thus, the switching mechanism 80 can switch between a state in which the protective cover 70 and the cap 60 are coupled and winding up of the cord can be performed, and a state in which the protective cover 70 is released form the cap 60 and the protective cover 70 suppresses the scattering of the objects.

Meanwhile, as illustrated in FIGS. 1 and 2, the plate spring 82 is formed in a rod shape that extends linearly, and includes both ends that are bent upward, and a center convex section obtained by bending the rod upward in a convex shape. As illustrated in FIG. 4, the plate spring 82 is attached to the disk 61 by the both ends, which are bent upward, being fixed to the lower surface side of the disk 61 of the cap 60. A concave section recessed downward from the upper surface is formed at a center in the longitudinal direction of the slide piece 81 and, as such, the center convex section of the plate spring 82 engages with the concave section of the slide piece 81 when the slide piece 81 is positioned at the center of the disk 61 of the cap 60 without entering into the engaging recess 76 of the protective cover 70. Additionally, in a state in which the center convex section is engaged, the plate spring 82 presses, by the elastic force thereof, the center convex section into the concave section of the slide piece 81. Thus, the state in which the slide piece 81 is positioned at the center of the disk 61 is maintained by the plate spring 82. As a result, the plate spring 82 can maintain the state in which the slide piece 81 is retreated from the engaging recess 76, that is, can maintain the state in which the coupling of the protective cover 70 and the cap 60 is released. Thus, the plate spring 82 maintains the state described above in which the protective cover 70 suppresses scattering of the objects. In other words, the plate spring 82 prevents unintentional switching to the state in which the protective cover 70 and the cap 60 are coupled.

### Mechanism for restricting cord feed out function

In the cord holding device 10, the cap 60 is directly coupled to the bobbin 40, and the protective cover 70 is indirectly coupled to the bobbin 40 via the annular member 73, the cylinder member 74, and the cap 60. As such, during rotation of the rotating shaft of the mower, the cord can be fed out by pressing the cap 60 and the protective cover 70 upward with respect to the upper case 20 and the lower case 30. For example, at a time of mowing work, the cord can be fed out by striking the rotating cord holding device 10 on the ground. However, when performing mowing in which the cord holding device 10 is disposed near the ground, the cord holding device 10 may inadvertently contact the ground and, as a result, the cord may be fed out. Such a mistaken operation is more likely to occur when the cord holding device 10 is rotating at high speed, which facilitates the mowing of plants.

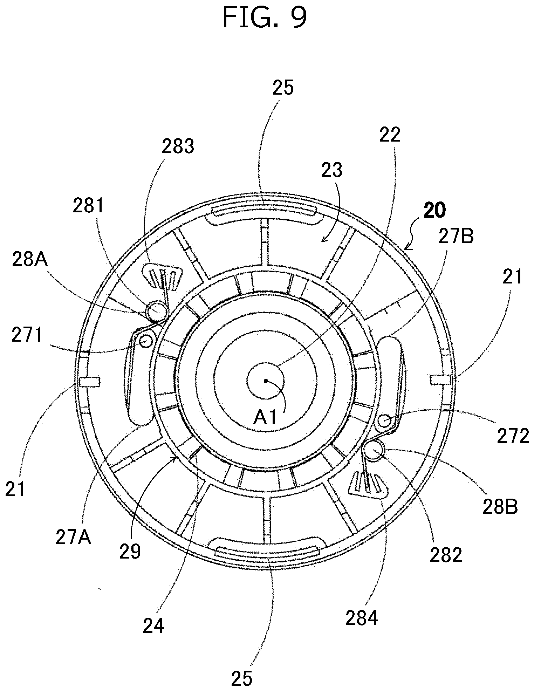

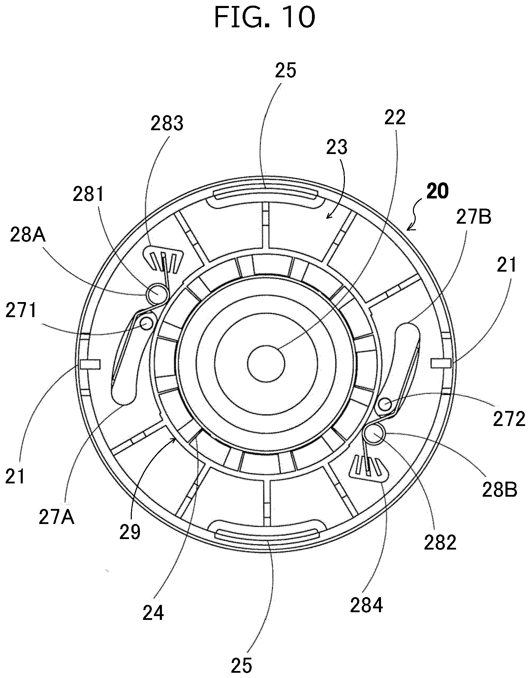

As such, a mechanism (hereinafter referred to as "feed out restricting mechanism") that restricts feeding out of the cord when rotating at high speed is mounted on the cord holding device 10. Next, the feed out restricting mechanism is described while referencing FIGS. 1, 2, and 4 and, also, FIGS. 9 and 10.

As illustrated in FIGS. 1 and 2, the feed out restricting mechanism includes movable pieces 27A, 27B accommodated in the upper case 20, and springs 28A, 28B that are connected to the movable pieces 27A, 27B and that elastically deform in accordance with centrifugal force generated by the rotation of the cord holding device 10 to change the positions of the movable pieces.

Each of the movable pieces 27A, 27B is formed is a substantially rectangular plate shape, and specifically is formed in a plate shape having a shape that is curved in an arc shape in the longitudinal direction. Flat plate surfaces of the movable pieces 27A, 27B are faced perpendicular to the cylinder axis A1 of the upper case 20, and side surfaces recessed in the arc shape are faced to the cylinder axis A1 side. Meanwhile, as illustrated in FIG. 9, a wall 29, that extends in a circular shape coaxial with the cylinder axis A1 of the upper case 20 and that surrounds the plurality of claws 24, is formed on the lower surface of the ceiling plate 23 of the upper case 20. The movable pieces 27A, 27B are disposed on the lower surface of the ceiling plate 23 in a state contacting the wall 29. Moreover, the movable pieces 27A, 27B are fixed to the ceiling plate 23 in a slidable state by protrusions 271, 272 of the ceiling plate 23 being inserted into a through-hole formed in a first end of each the movable pieces 27A, 27B.

The springs 28A, 28B are components that are also called "urgers", and press the movable pieces 27A, 27B against the wall 29 described above.

Specifically, the springs 28A, 28B are configured from torsion coil springs in which arm sections extend from both ends of a coil section. Moreover, first arm sections of the springs 28A, 28B extend from the coil sections, past the first ends of the movable pieces 27A, 27B held by the protrusions 271, 272, and to second ends of the protrusions 271, 272 on the sides opposite the first ends. Second arm sections are fixed to fixing members 283, 284 in a state in which spaces between the first arm sections and the second arm sections are expanded and the springs 28A, 28B are elastically deformed. The fixing members 283, 284 are provided on the lower surface of the ceiling plate 23 of the upper case 20 and are located at positions separated from the first ends of the movable pieces 27A, 27B. Moreover, the coil sections of the springs 28A, 28B are screwed to protrusions 281, 282 that are provided on the lower surface of the ceiling plate 23, and that are adjacent to the protrusions 271, 272 in the circumferential direction. Thus, the springs 28A, 28B urge the movable pieces 27A, 27B to maintain the state of contact with the wall 29 as described above. Moreover, when attempting to swing from the state in which the movable pieces 27A, 27B contact the wall 29, the springs 28A, 28B apply an urging force corresponding to the angle of that swing. As a result, when centrifugal force is applied to the movable pieces 27A, 27B due to the cord holding device 10 rotating when performing mowing work, the springs 28A, 28B cause the movable pieces 27A, 27B to swing at a swing angle that corresponds to the magnitude of that centrifugal force.

Meanwhile, as illustrated in FIGS. 1 and 2, an edge 37 (also referred to in the present description as "protrusion") that extends along the outer circumference and that protrudes upward is provided on the flange 43 of the upper side of the bobbin 40. The plurality of claws 41 described above is provided on the flange 43 and, as a result, the flange 43 includes a recess 38 (also referred to in the present description as "second recess") illustrated in FIG. 4 between the edge 37 and the plurality of claws 41. The recess 38 is relatively recessed more than the edge 37 and the plurality of claws 41.

At a time of stopping at which the cord holding device 10 is not rotating (hereinafter referred to simply as "time of stopping"), the movable pieces 27A, 27B are not positioned above the edge 37 and are positioned above the recess 38 between the edge 37 and the claws 41, as illustrated in FIG. 4. In other words, when viewed from above at a time of stopping, the movable pieces 27A, 27B are positioned in the region of the recess 38 between the edge 37 and the claws 41. Moreover, when the cord holding device 10 is rotating at low-speed (hereinafter, referred to simply as "rotating at low-speed") as well, the movable pieces 27A, 27B are positioned in the region of the recess 38. Additionally, the movable pieces 27A, 27B are formed in a shape having a thickness that is less than a height H in the vertical direction of a gap located between the edge 37 of the bobbin 40 and the lower surface of the ceiling plate 23 of the upper case 20, and in a state in which the cap 60 and the protective cover 70 are not pressed upward and, also, the bobbin 40 is pressed against the bottom plate 34 of the lower case 30 by the coil spring 50. As such, when rotating at low-speed, when the cap 60 and the protective cover 70 are pressed upward, and the bobbin 40 separates from the bottom plate 34 of the lower case 30 and begins to lift toward the ceiling plate 23 of the upper case 20, the movable pieces 27A, 27B relatively enter into the recess 38 located between the edge 37 located on the flange 43 of the bobbin 40 and the claws 41. Thus, the movable pieces 27A, 27B do not obstruct the lifting of the bobbin 40. As a result, when rotating at low-speed, even if the cap 60 and the protective cover 70 are pressed against the ground, the bobbin 40 can separate and lift from the bottom plate 34 of the lower case 30. As such, the claws 41 of the bobbin 40 can be brought close to the claws 24 of the case 20, and feeding out of the cord can be performed.

In contrast, when the cord holding device 10 is rotating at high speed (hereinafter referred to simply as "rotating at high speed"), the centrifugal force generated by the rotating at high speed increases and, as illustrated in FIG. 10, the movable pieces 27A, 27B separate from the wall 29 of the ceiling plate 23 of the upper case 20 and swing at a certain swing angle or greater. As a result, although not illustrated in FIG. 10, the movable pieces 27A, 27B are positioned above the edge 37. In other words, when viewed from above, the movable pieces 27A, 27B overlap the edge 37. Thus, when rotating at high speed, even if the cap 60 and the protective cover 70 are pressed upward, and the bobbin 40 separates from the bottom plate 34 of the lower case 30 and begins to rise toward the ceiling plate 23 of the upper case 20, the movable pieces 27A, 27B interfere with the edge 37 and the lifting of the bobbin 40 is obstructed. That is, the movable pieces 27A, 27B function as stoppers of the lifting of the bobbin 40. As a result, when rotating at high speed, even if the cap 60 and the protective cover 70 are pressed against the ground, the bobbin 40 cannot separate from the bottom plate 34 of the lower case 30, and feeding out of the cord cannot be performed.

Note that the fixing members 283, 284 described above are provided with three recesses in order to adjust the magnitude of the urging force applied to the movable pieces 27A, 27B by the springs 28A, 28B. Moreover, an end of one of the two arm sections of the springs 28A, 28B is inserted and fixed in one of the three recesses. In FIGS. 9 and 10, the end of the arm section of the springs 28A, 28B is inserted and fixed in the center recess, but the other recesses may be used.

Additionally, in the present description, the phrase "rotating at low speed" means rotation in which the movable pieces 27A, 27B are, when viewed from above, positioned in the region of the recess 38 located between the edge 37, located on the flange 43 of the bobbin 40, and the claws 41, and the phrase "rotating at high speed" means rotation in which the movable pieces 27A, 27B overlap the edge 37 of the flange 43 when viewed from above.

### Use method

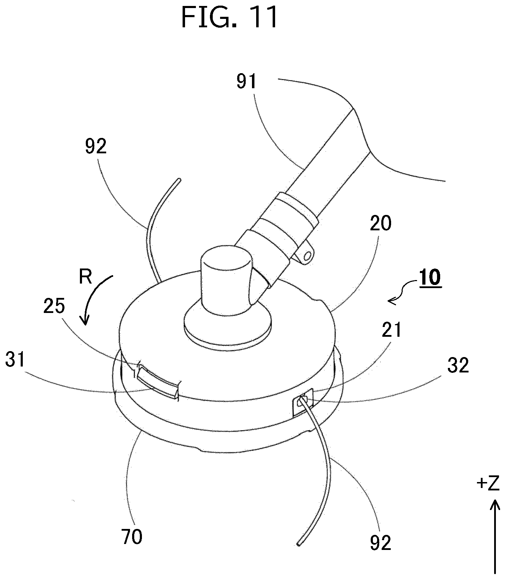

Next, a use method of the cord holding device 10 is described while referencing FIGS. 6 to 8 and, also, FIGS. 11 to 16.

While not illustrated, firstly, the connection port 22 of the upper case 20 is placed against the rotating shaft at the tip of a handle 91 of the mower, and the upper case 20 is attached to the rotating shaft by a bolt. Meanwhile, the lower case 30 is assembled in a state in which the various components such as the bobbin 40, the coil spring 50, and the like are accommodated in advance, and the cap 60, the protective cover 70, and the like are attached. When the upper case 20 is attached to the rotating shaft, the lower case 30 is attached to the upper case 20 and, thus, the cord holding device 10 is assembled.

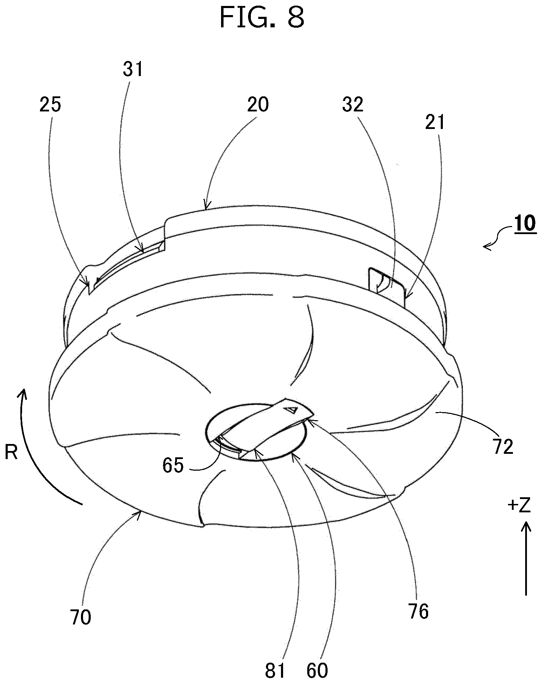

Next, the slide piece 81 of the switching mechanism 80 is slid to engage the slide piece 81 with the engaging recess 76 of the protective cover 70 as illustrated in FIG. 8. As a result, the cap 60 and the protective cover 70 are coupled to each other. Then, while not illustrated, in a state in which the cap 60 and the protective cover 70 are coupled, a tip of a cord 92 is inserted through one of the cord pull-out ports 21 of the upper case 20 and passed through the hole 46, for passing the cord 92, of the bobbin 40, and the tip of that cord 92 is pulled out through the other of the cord pull-out ports 21. After appropriately pulling out the tip of the cord 92, the protective cover 70 is rotated in the rotation direction R while gripping the upper case 20. As a result, the cord 92 is wound up on the bobbin 40. Then, the tip and the tail of the cord 92 are set to a state protruding a certain length from the cord pull-out ports 21.

At this time, the cap 60 connected to the bobbin 40 and the protective cover 70 are coupled by the switching mechanism 80 and, as such, it is sufficient that the protective cover 70, which has a large outer diameter, is rotated. Thus, the cord 92 can be wound up with a small force. Additionally, since the outer diameter is large, the protective cover 70 is easy to grab, and winding up is facilitated.

When the winding up of the cord 92 is completed, the slide piece 81 of the switching mechanism 80 is slid in the opposite direction, thereby disengaging the slide piece 81 from the engaging recess 76 of the protective cover 70 as illustrated in FIGS. 6 and 7. At this time, in the switching mechanism 80, the slide piece 81 maintains, due to the center convex section of the plate spring 82, the state of the slide piece 81 being disengaged from the engaging recess 76. As such, the slide piece 81 does not unintentionally move thereafter, even when the rotating shaft of the mower is rotated.

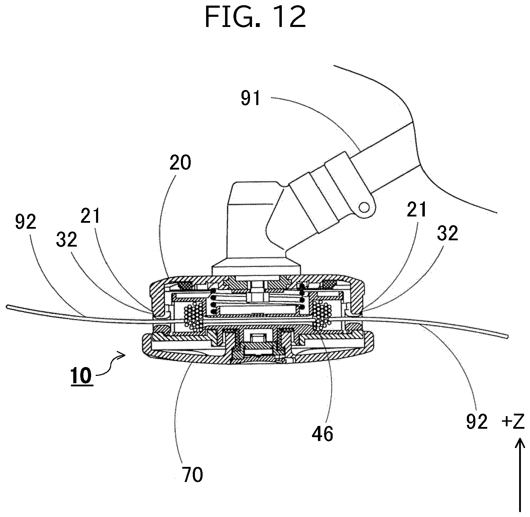

After the slide piece 81 is disengaged from the engaging recess 76 of the protective cover 70, the rotating shaft of the mower is rotated. As illustrated in FIGS. 11 and 12, the tip portion and the tail portion of the cord 92 are extended outward and in the radial direction of the cord holding device 10 due to centrifugal force. In this state, the rotating shaft of the mower is set to high-speed rotation, the cord holding device 10 is moved to near plants to be mowed, and mowing is carried out by bringing the cord into contact with the plants.

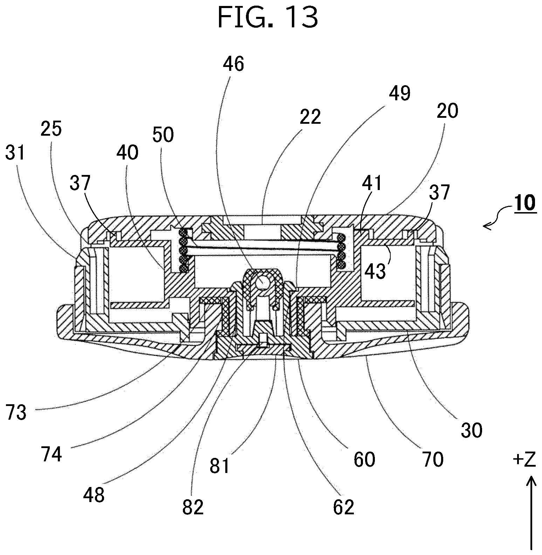

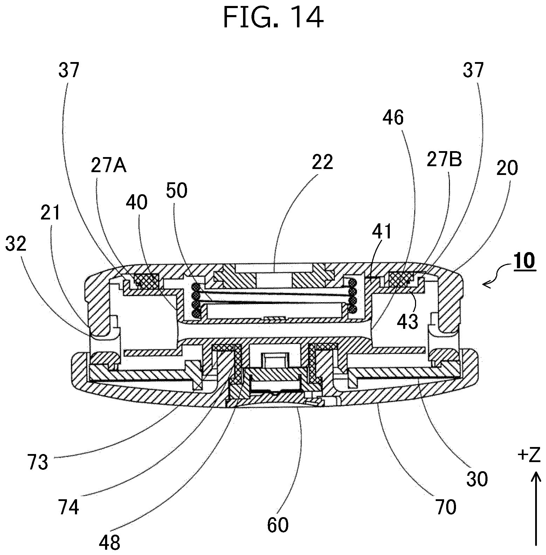

During this mowing work, when the cord wears and the user desires to feed out the cord, the rotating shaft of the mower is set to low-speed rotation, and the cap 60 and the protective cover 70 of the cord holding device 10 are pressed against the ground. Since the user is holding the mower, the upper case 20 and the lower case 30 move relatively downward, and the cap 60 and the protective cover 70 move relatively upward. As a result, the bobbin 40 coupled to the cap 60 moves upward with respect to the upper case 20 and the lower case 30. As such, the bobbin 40 separates from the lower case 30 within the cases, and approaches the upper case 20. Moreover, the coil spring 50 is compressed as illustrated in FIGS. 13 and 14. At this time, as illustrated in FIG. 14, the movable pieces 27A, 27B do not interfere with the edge 37 located on the flange 43 of the upper side of the bobbin 40. As a result, the claws 41 located on the flange 43 of the upper side of the bobbin 40 are brought close to the claws 24 of the upper case 20 (not illustrated in FIG. 14), and move along the inclined surfaces of the claws 24 to the vertical surfaces of the adjacent claws 24. As such, an amount of the cord corresponding to that movement distance is fed out. The user of the mower repeats this operation until the cord 92 is the desired length.

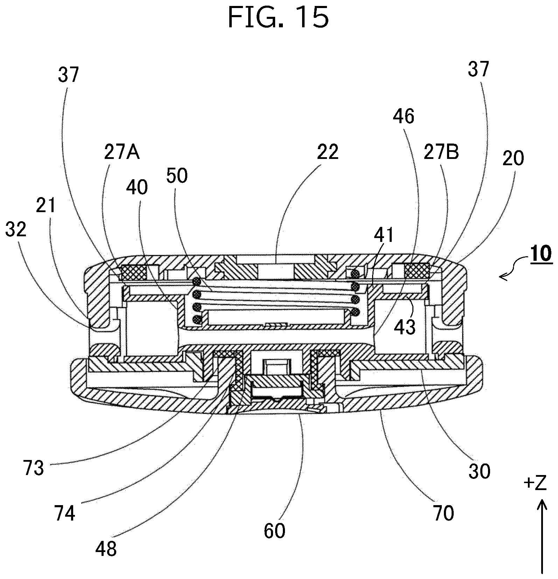

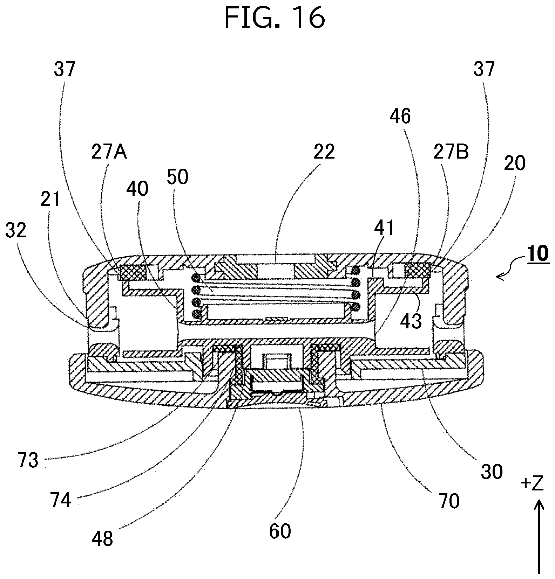

Note that FIG. 13 is a cross-sectional view taken along a line at the same position as line V-V illustrated in FIG. 3, and FIG. 14 is a cross-sectional view taken along a line at the same position as line IV-IV illustrated in FIG. 3. Hereinafter described FIGS. 15 and 16 are also cross-sectional views taken along a line at the same position as line IV-IV.

Meanwhile, when the rotating shaft of the mower is rotating at high speed, as illustrated in FIG. 15, the movable pieces 27A, 27B move to above the edge 37 located on the flange 43 of the upper side of the bobbin 40 due to centrifugal force. As a result, even if the cap 60 and the protective cover 70 are pressed against the ground, the movable pieces 27A, 27B interfere with the edge 37 of the flange 43 as illustrated in FIG. 16, and the bobbin 40 does not move upward with respect to the upper case 20 and the lower case 30. As a result, the claws 41 located on the flange 43 of the upper side of the bobbin 40 are not brought close to the claws 24 of the upper case 20 (not illustrated in FIG. 16), and the cord is not fed out. Thus, when the cord holding device 10 is rotating at high speed, even if the cap 60 and the protective cover 70 mistakenly contact the ground, the cord is not fed out and operation errors can be prevented.

As described above, with the cord holding device 10 according to Embodiment 1, the cap 60 includes the switching mechanism 80 that is provided on the disk 61 and slidably in the radial direction of the disk 61, engages with the cover section 72 of the protective cover 70 to couple the disk 61 and the cover section 72 when slid outward and in the radial direction of the disk 61, and separates from the cover section 72, thereby releasing the coupling of the disk 61 and the cover section 72 when slid in the opposite direction. As such, the coupling of the disk 61 and the cover section 72 is released by the switching mechanism 80 when the rotating shaft of the mower is attached to the ceiling plate 23 of the upper case 20 and the rotating shaft is rotating and, as such, the cover section 72 can be detached from the disk 61 that rotates together with the upper case 20, the lower case 30, and the bobbin 40. As a result, the protective cover 70 can suppress the scattering of the objects on the ground such as pebbles, dirt, and the like.

Additionally, the disk 61 is coupled to the cover section 72 by the switching mechanism 80 and, as such, the cap 60 that includes the disk 61 can rotate the coupling target, namely the bobbin 40, when the user rotates the cover section 72. As a result, the user can easily wind up the cord on the bobbin 40.

With the cord holding device 10, the bobbin 40 includes the edge 37 that is provided on the outer circumference side and that protrudes upward, and the recess 38 that is recessed relatively downward from the tip of the edge 37 due to the edge 37 protruding upward and, in a state in which the bobbin 40 is pressed against the bottom plate 34 of the lower case 30 by the coil spring 50, includes a gap between the ceiling plate 23 of the upper case 20 and the edge 37. Furthermore, the upper case 20 includes the movable pieces 27A, 27B that have a thickness in the vertical direction that is less than the height in the vertical direction of the gap, and that move in accordance with the centrifugal force generated when the cord holding device 10 rotates. As such, when the cord holding device 10 is rotating at high speed, the movable pieces 27A, 27B move and enter the gap due to the centrifugal force and, as a result, the pressing up of the bobbin 40, by the cap 60, from the bottom plate 34 of the lower case 30 can be restricted. As a result, feeding out of the cord when rotating at high speed is restricted. As such, it is possible to prevent the operation error of the cord being fed out due to the cap 60 and the protective cover 70 being unintentionally pressed when rotating at high speed.

The cord holding device 10 according to an embodiment of the present disclosure is described above, but the present disclosure is not limited to the embodiment. For example, in the embodiment described above, the cap 60 closes the through-hole of the cover section 72 of the protective cover 70, but the present disclosure is not limited thereto. In the present disclosure, it is sufficient that the cap 60 is connected to the bobbin 40 and is coupled to the bobbin 40, and the cap 60 need not close the through-hole of the cover section 72. The cap 60 may also be called a coupling member.

Additionally, the cap 60 includes the coupling claws 62, but since it is sufficient that the cap 60 is connected to the bobbin 40, the cap 60 may be connected to the bobbin 40 by a screw, an adhesive material, or the like, for example, instead of by the coupling claws 62.

In the embodiment described above, the slide piece 81 has a plate-like shape but, in the present disclosure, the slide piece 81 is not limited thereto. For example, the slide piece 81 may have a shape called a block shape, or may have a prism shape.

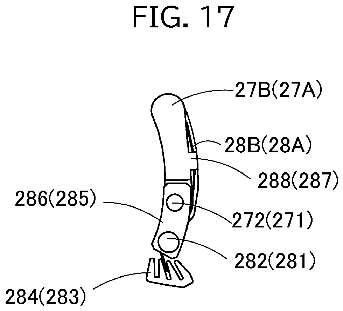

In the embodiment described above, the coil sections of the springs 28A, 28B are only fixed to the protrusions 281, 282 by screws. However, the present disclosure is not limited thereto. In the present disclosure, as illustrated in FIG. 17, to enhance stability, the coil sections of the springs 28A, 28B may be screwed to the protrusions 281, 282 via plate-like washers 285, 286 that bend in an arc-shape in the longitudinal direction. In such a case, the ends, on the protrusions 271, 272 sides, of the movable pieces 27A, 27B may be recessed upward to have flat shapes, and the washers 285, 286 may cover the flat recesses from below. Moreover, the longitudinal direction of the washers 285, 286 may be directed in the longitudinal direction of the movable pieces 27A, 27B. Additionally, the movable pieces 27A, 27B may include, on the side surfaces bent in an arc-shape, recesses to which the arm sections of the springs 28A, 28B conform, and protrusions 287, 288 that support the arm sections. As a result, when the movable pieces 27A, 27B swing due to the circumferential force generated by the rotation of the cord holding device 10, that swinging can be stabilized.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2020-151046, filed on September 9, 2020, and Japanese Patent Application No. 2020-151047, filed on September 9, 2020, of which the entirety of the disclosures is incorporated by reference herein.

Note that the bobbin, the protective cover, the switching mechanism, the slide piece, the upper case, and the elastic member can also be called a winder, a lower lid, a locking mechanism, a connection piece, an upper lid, and an urger, respectively. In such a case, a portion of an entirety of the embodiment described above can be described as in the following appendices.

### Appendix 1

A cord holding device for a mower, comprising:
a winder capable of winding a cord;
a lower lid provided below the winder; and
a locking mechanism that switches between a coupled state and a non-coupled state of the winder and the lower lid.

### Appendix 2

The cord holding device for a mower according to appendix 1, wherein, at a bottom surface of the lower lid, the locking mechanism switches between the coupled state and the non-coupled state of the winder and the lower lid.

### Appendix 3

The cord holding device for a mower according to appendix 1 or 2, wherein the locking mechanism connects a connection piece provided to one of the winder and the lower lid to a connector provided to another of the winder and the lower lid, or releases the connection to switch between the coupled state and the non-coupled state of the winder and the lower lid.

### Appendix 4

The cord holding device for a mower according to any one of appendices 1 to 3, wherein the bottom surface of the lower lid is flat.

### Appendix 5

The cord holding device for a mower according to any one of appendices 1 to 4, wherein an outer circumference of the lower lid is greater than an outer circumference of the winder.

### Appendix 6

A cord holding device for a mower, comprising:
a winder capable of winding a cord; and
an upper lid provided above the winder, wherein
the winder includes an edge protruding upward,
the upper lid includes a movable piece and an urger,
the movable piece is urged toward a radial direction inner side of the upper lid by an urging force of the urger,
at a time of rotation of the upper lid, the movable piece is movable toward a radial direction outer side of the upper lid against the urging force of the urger, and
in a state in which the movable piece is moved toward the radial direction outer side of the upper lid, when viewed from above, at least portions of the edge and the movable piece are at positions that overlap each other.

### Appendix 7

The cord holding device for a mower according to appendix 6, further comprising:
a lower lid provided below the winder, wherein
the upper lid and the lower lid do not integrally rotate.

### Appendix 8

The cord holding device for a mower according to appendix 6 or 7, wherein
a base end of the movable piece is fixed to the upper lid,
a tip end of the movable piece is urged toward the radial direction inner side of the upper lid by the urging force of the urger, and
the tip end of the movable piece is movable toward the radial direction outer side of the upper lid against the urging force of the urger at a time of rotation of the upper lid.

### Appendix 9

The cord holding device for a mower according to any one of appendices 6 to 8, wherein the movable piece is a shape having a plane parallel to a direction orthogonal to a rotating shaft of the upper lid.

### Reference Signs List

- 10: Cord holding device
- 20: Upper case
- 21: Cord pull-out port
- 22: Connection port
- 23: Ceiling plate
- 24: Claw
- 25: Attachment hole
- 26: Groove
- 27A, 27B: Movable piece
- 28A, 28B: Spring
- 29: Wall
- 30: Lower case
- 31: Hook
- 32: Cord pull-out port
- 33: Fitting
- 34: Bottom plate
- 35: Claw
- 36: Through-hole
- 37: Edge
- 38: Recess
- 40: Bobbin
- 41,: 42 Claw
- 43,: 44Flange
- 45: Pipe-like member
- 46: Hole
- 47: Groove
- 48: Disk seat
- 49: Through-hole
- 50: Coil spring
- 60: Cap
- 61: Disk
- 62: Coupling claw
- 65: Groove
- 70: Protective cover
- 71: Cylinder section
- 72: Cover section
- 73: Annular member
- 74: Cylinder member
- 75: Outer circumferential wall
- 76: Engaging recess
- 80: Switching mechanism
- 81: Slide piece
- 82: Plate spring
- 91: Handle
- 92: Cord
- 271, 272: Protrusion
- 281, 282: Protrusion
- 283, 284: Fixing member
- 285,286: Washer
- 287, 288: Protrusion
- A1 to A3, A5: Cylinder axis
- A4: Disk axis

## Claims

1. A cord holding device for a mower, comprising:
a case that includes a ceiling plate to which a rotating shaft of a mower is attached and a bottom plate on which a through-hole is formed at a position coaxial with a center axis of the rotating shaft when the rotating shaft is attached to the ceiling plate, wherein a plurality of first claws is provided on a surface of an upper side of the bottom plate, a bobbin on which a mower cord is windable that is accommodated coaxially with the center axis in an internal space located between the ceiling plate and the bottom plate, the bobbin including, on a surface of a lower side, and a plurality of second claws that is engageable with the plurality of first claws, and the case is coupled to the bobbin by the bobbin being pressed against the bottom plate by a coil spring and the plurality of second claws engaging with the plurality of first claws;
a coupling member of the bobbin that includes a connector that is connected to the bobbin and that extends from the bobbin, through the through-hole, and downward from the bottom plate of the case, and a disk that is provided on a lower end of the connector and that is coaxial with the center axis, wherein the bobbin is rotated as a result of, when the plurality of first claws and the plurality of second claws are engaged, that engagement being released due to the disk being pressed to one side of the bobbin and the disk rotating around the center axis; and
a protective cover including a cylinder section that is rotatably held on the bobbin, is inserted into the through-hole and extends from the through-hole downward from the bottom plate of the case, and that is rotatable coaxially with the center axis in the through-hole, the coupling member being inserted into the cylinder section, and a cover section that is supported on a lower end of the cylinder section and that covers the case from below, wherein
the coupling member includes a switching mechanism that is provided slidably in a radial direction of the disk on the disk, engages with the cover section of the protective cover to couple the disk and the cover section when slid outward and in the radial direction of the disk, and separates from the cover section, thereby releasing the coupling of the disk and the cover section when slid in an opposite direction.

2. The cord holding device for a mower according to claim 1, wherein
the protective cover includes, on the cover section, a first recess recessed from an inner circumference toward a side of an outer circumference of the cover section,
the switching mechanism includes, on the disk, a slide piece that is slidable in the radial direction of the disk, and
when the slide piece is slid outward and in the radial direction of the disk, an end located on a side of a slide direction enters the first recess, thereby coupling the disk provided with the slide piece to the cover section provided with the first recess.

3. The cord holding device for a mower according to claim 2, wherein
the disk includes a groove that accommodates the slide piece therein, extends from a disk center to an outer circumference, and holds the slide piece such that the slide piece is slidable in an extending direction of the groove,
a thickness of the slide piece is identical to a depth of the groove, and
the disk is positioned at an identical height in a vertical direction as the cover section or above the cover section.

4. The cord holding device for a mower according to any one of claims 1 to 3, wherein the cover section covers the case from below by an outer circumference of the cover section being positioned on an outer side of the case.

5. The cord holding device for a mower according to any one of claims 1 to 4, wherein
the bobbin includes a protrusion that is provided on an outer circumference side and that protrudes upward, and a second recess that is provided more on an inner circumference side than the protrusion and that is recessed relatively downward from a tip of the protrusion due to the protrusion protruding upward and, in a state in which the plurality of first claws and the plurality of second claws are engaged, includes a gap between the ceiling plate of the case and the protrusion,
the case may include a movable piece that has a thickness in the vertical direction that is less than a height in the vertical direction of the gap, and that moves in accordance with centrifugal force generated when the rotating shaft is attached to the ceiling plate and rotates, and
due to the movable piece being positioned in the second recess, when viewed from above, when the rotating shaft is rotating at low speed, the movable piece does not restrict pressing up of the bobbin from the bottom plate by the coupling member, and due to the movable piece moving to a position overlapping the protrusion, when viewed from above, when the rotating shaft is rotating at high speed, the movable piece enters the gap and restricts the pressing up of the bobbin from the bottom plate by the coupling member.

6. The cord holding device for a mower according to claim 5, wherein
the case further includes an elastic member that is disposed in the internal space of the case, a first portion of the elastic member being fixed to the ceiling plate, a second portion separated from the first portion supporting an end of the movable piece, and
the movable piece moves due to centrifugal force, applied to the movable piece when the rotating shaft is attached to the ceiling plate and rotates, elastically deforming the elastic member.

7. The cord holding device for a mower according to claim 6, wherein
the case includes a wall that protrudes downward from the ceiling plate,
the elastic member is a coil spring having a first end and a coil section that are fixed to the ceiling plate and a second end that is fixed to the movable piece, the second end pressing the movable piece toward the wall, and
the coil spring causes the movable piece to contact the wall when rotation by the rotating shaft is not carried out and the case is stopped.
